# EUROPÄISCHE PATENTSCHRIFT

(11) **EP 3 100 649 B1**
(45) Veröffentlichungstag und Bekanntmachung des Hinweises auf die Patenterteilung: **28.07.2021**
(21) Anmeldenummer: 16001181.3
(22) Anmeldetag: 19.01.2011
(51) Int. Cl.: C09J 7/29, A47G 27/04

(54) **SELBSTKLEBEFOLIE**
SELF-ADHESIVE FOIL
FILM ADHESIF AUTOCOLLANT

(30) Priorität: 20.01.2010 DE 102010005182
(43) Veröffentlichungstag der Anmeldung: 07.12.2016
(62) Teilanmeldung aus: 11000386.0
(73) Patentinhaber: Uzin Tyro AG, 6374 Buochs (CH)
(72) Erfinder: Wigger, Thomas, 6232 Geuensee (CH)
(74) Vertreter: Kuhnen & Wacker Patent- und Rechtsanwaltsbüro PartG mbB

(56) Entgegenhaltungen:
- EP-A1- 1 944 345
- EP-A1- 2 039 735
- EP-A2- 0 816 459
- WO-A1-2006/045435
- WO-A2-2008/119003
- DE-U1- 20 014 455
- None

## Beschreibung

Die Erfindung betrifft die Verwendung einer Selbstklebefolie, zum Verkleben eines Belags, insbesondere eines Bodenbelags, einer Sockelleiste oder eines Wandbelags, beispielsweise mehrteilig, auf einem Untergrund, insbesondere einem Fußboden, einer Treppe oder einer Wand, mit einer Trägerschicht, welche an einer oberen, dem Belag zugewandten Oberfläche und an einer unteren, dem Untergrund zugewandten Oberfläche mit einer Haftkleberbeschichtung beschichtet ist, gemäß dem Oberbegriff des Anspruchs 1.

Beläge können beispielsweise elastische Beläge für Boden oder Wand sein, welche in Einzelelementen aneinander stoßend verlegt werden können, oder es können auch Sockelleisten sein. Elastische Beläge und Sockelleisten weisen prozesstechnisch bedingt eine mehr oder weniger stark ausgeprägte Neigung zu Dimensionsänderungen - insbesondere zu Schrumpf, Verformungen, Aufwölbungen - auf. Dies kann insbesondere bei Belägen, die in Einzelelementen verlegt werden, z.B. Designbeläge oder PVC-Vliesen, zu unerwünschter Fugenbildung führen. Die Dimensionsänderungen von Sockelleisten können zu hohlen Innenecken und/oder zu Nahtfugen führen.

Generell werden Selbstklebefolien mit beidseitiger Haftkleberbeschichtung heutzutage in unterschiedlichen Breiten für die Verklebung beispielsweise von Bodenbelägen und/oder Sockelleisten z. B. im Bereich des Innenausbaus verwendet. Dabei kann es insbesondere dann zu Schwierigkeiten kommen, wenn Beläge, welche Weichmacher enthalten, mit solchen Selbstklebefolien/-bändern verklebt werden. Die Weichmacher bzw. ähnliche Stoffe können dabei aus dem zu verklebenden Material in den Kleber und/oder den Untergrund diffundieren und durch diese Stoffmigration und die dadurch eintretenden Materialänderungen die belagsinhärente Neigung zu Dimensionsänderungen verstärken, z.B. bei einem PVC-Designbelag aus einzelnen, aneinander gefügten Belagselementen, so dass es insbesondere langfristig beispielsweise zu Fugen zwischen den Belagselementen und/oder zu Verformungen, wie etwa Aufwölbungen in einem derart großflächig verlegten Belag kommen kann. Dies ist selbstverständlich nicht erwünscht.

Heute werden gemäß Stand der Technik elastische Beläge in Einzelelementen, insbesondere Designbeläge und/oder, PVC-Vliesen, im Allgemeinen unter Verwendung von Nassklebern (Dispersion und/oder Reaktiv zwei Komponenten) auf Untergründe geklebt. Beispielsweise kommen dabei Produkte des Unternehmens Uzin Utz AG zum Einsatz, beispielsweise unter der Bezeichnung Uzin KE 2000 S, Uzin KE 430 oder Uzin KE 421.

PVC-Sockelleisten, Treppenbeläge oder Wandbeläge werden heute in der Regel mit zumeist lösemittelhaltigen Kontaktklebern, z.B. Uzin GN 222, Uzin DK 700, geklebt. Treppenbeläge und teilweise auch Wandbeläge werden teilweise auch mit Nassklebern geklebt.

Die Verwendung von Nassklebern und Kontaktkleber ist relativ aufwändig, außerdem treten dabei teilweise hohe VOC-Emissionen und/oder teilweise starke Geruchsemissionen auf. Nasskleber weisen zudem oft eine zu geringe Anfangshaftung, ein schlechtes Eindruckverhalten während der Abbindphase und/oder lange Wartezeiten bis zur Begehbarkeit und bis zur Belastbarkeit auf. Die Vermeidung von möglicher Migration von Weichmachern aus den Belägen ist dabei auch nicht möglich.

Für die Bodenbelagsverklebung oder für die Verklebung von Sockelleisten kommen heute auch schon doppelseitige Selbstklebefolien/-bänder zum Einsatz, beispielsweise Produkte des Unternehmens Uzin Utz AG mit den Produktbezeichnungen SIGAN 1, SIGAN 2 oder UZIN CONTACT. Bei solchen Selbstklebefolien/-bändern ist zwar die Verarbeitbarkeit gegenüber der Verwendung von Nassklebern stark verbessert und auch ist damit üblicher Weise eine rasche Belastbarkeit nach der Verklebung gegeben, aber die Problematik der Dimensionsänderung aufgrund von Weichmachermigration aus den Belägen tritt dabei nach wie vor auf bzw. wird durch die dabei zum Einsatz kommenden Selbstklebematerialien, d.h. Trockenklebstoffe, aufgrund der dadurch noch vermehrten Migration noch eher verstärkt.

Beispielsweise im Bereich der Lebensmittelverpackungen gibt es bereits Ansätze, bei welchen z. B. Sperrschichten bei Folien eingesetzt werden, wobei durch die Sperrschichten die (übermäßige) Migration von Stoffen, z.B. Weichmachern, bzw. Gasen zwischen einzelnen Schichten vermieden werden soll. Diese Sperrschichten sind jedoch oft nicht ausreichend, um Weichmacher, wie sie in Elastischen Belägen in Art und Umfang eingesetzt werden, in genügendem Masse abzusperren. Selbst wenn so gestaltete Folienträger als Selbstklebefolie ausgerüstet würden, könnte das geschilderte Problem der erhöhten Dimensionsänderungen aufgrund von Weichmachermigration bei der Belagsverlegung mit Trockenklebern nur unvollständig gelöst werden. Es könnte dabei nach wie vor eine zu große Menge Weichmacher aus dem Belag in den Klebstoff und/oder in den Untergrund weg migrieren, wodurch die geschilderten Dimensionsänderungen nach wie vor auftreten könnten.

Die deutsche Patentschrift DE 197 16 996 C1 beschreibt ein Verfahren zur Herstellung eines druckempfindlichen doppelseitigen Klebebands auf Kautschukbasis, bei welchem mittels Koextrusion auf einem Trägermaterial eine zusätzliche Sperrschicht aufgelegt wird, welche dann wiederum vollflächig jeweils mit Schmelzhaftkleber beschichtet wird. Von den beschriebenen Schmelzklebstoffen ist bekannt, dass sie in erheblichem Masse Weichmacher aufnehmen und Stoffmigration zulassen und dabei selber sehr stark ihre physikalischen Eigenschaften ändern. Mit diesem Aufbau kann das Problem der Dimensionsänderungen also nicht gelöst werden.

Die deutsche Offenlegungsschrift DE 1 544 777 betrifft die Verklebung von weichmacherhaltigen Stoffen mit anderen weichmacherhaltigen oder weichmacherfreien Stoffen, wobei dort zwischen den Stoffen eine weichmacherundurchlässige Folie, z.B. eine Metallfolie aus Aluminium, eingeklebt wird, welche die Wanderung von Weichmacher verhindern soll.

Die deutsche Offenlegungsschrift DE 100 40 966 A1 beschreibt eine Selbstklebefolie zur Bodenbelagsverlegung und betrifft oben erwähnte Produkte des Unternehmens Uzin Utz AG, dem Mutterunternehmen der Anmelderin. Die beschriebene Selbstklebefolie kann optional so gestaltet sein, dass die dortige Trägerschicht einen Abschnitt als Bremsschicht gegen den ungehinderten Durchgang von Additiven und/oder Weichmachern aufweist. Wie Untersuchungen der Anmelderin ergeben haben (siehe weiter unten), hat das entsprechende Vergleichsmuster 1 aber nicht die Eigenschaften, welche das Problem der Dimensionsänderungen bereits voll zufrieden stellend lösen könnten.

Die Verwendung einer Selbstklebefolie zum Verkleben eines Fußbodenbelags, wobei die Selbstklebefolie eine Trägerschicht aufweist, welche an einer oberen, dem Belag zugewandten Oberfläche und an einer unteren, dem Untergrund zugewandten Oberfläche mit einer Haftkleberbeschichtung beschichtet ist und eine Sperrschicht aus Polymermaterial umfasst, wird in der DE 200 14 455 U1 offenbart.

Es ist die Aufgabe der vorliegenden Erfindung, die Verwendung einer Selbstklebefolie vorzusehen, welche die Nachteile des Standes der Technik überwindet, und insbesondere die Verwendung einer Selbstklebefolie vorzusehen, welche auf konstruktiv einfache Weise eine hohe Formstabilität bietet, insbesondere eine hohe Formstabilität von damit verklebten weichmacherhaltigen Belägen über längere Zeiträume.

Diese Aufgabe wird erfindungsgemäß mit einer Verwendung einer Selbstklebefolie mit den Merkmalen gemäß dem Anspruch 1 gelöst. Bevorzugte Ausführungsformen der Erfindung sind in den Unteransprüchen definiert.

Die erfindungsgemäß verwendete Selbstklebefolie dient zum Verkleben eines Belags, insbesondere eines Bodenbelags, einer Sockelleiste oder eines Wandbelags, beispielsweise mehrteilig in Einzelelementen vorliegend, auf einem Untergrund, insbesondere einem Fußboden, einer Treppe oder einer Wand. Es kann dabei eine Anwendung denkbar sein, bei welcher beispielsweise mehrteilige PVC-Designbelagselemente auf einem Fußboden angeklebt werden oder Sockelleisten im Bereich des Sockels von Wänden im Innenausbau angeklebt werden. Die zu verklebenden Beläge können dabei also insbesondere Designbeläge sein, welche einen hohen Weichmacheranteil zumindest in ihrer Basisschicht aufweisen können. Die erfindungsgemäß verwendete Selbstklebefolie weist eine Trägerschicht auf, welche an einer oberen, dem Belag zugewandten Oberfläche und an einer unteren, dem Untergrund zugewandten Oberfläche mit einer Haftkleberbeschichtung beschichtet ist. Erfindungsgemäß weist die Selbstklebefolie eine Sperrschicht auf, welche für Weichmacher undurchlässig ist. Ferner ist die verwendete Selbstklebefolie erfindungsgemäß so gestaltet, dass die Haftkleberbeschichtung zumindest einer der Oberflächen begrenzt aufnahmefähig ist für Weichmacher und dabei eine Weichmacheraufnahmefähigkeit von erfindungsgemäß lediglich bis zu 20 g/m² aufweist.

Bevorzugt kann die begrenzte Weichmacheraufnahmefähigkeit im Bereich von 2 g/m² bis zu 20 g/m² liegen, besonders bevorzugt im Bereich von 5 g/m² bis zu 15 g/m².

Die begrenzte Weichmacheraufnahmefähigkeit von erfindungsgemäß nur bis zu 20 g g/m² der Haftkleberbeschichtung zumindest einer der Oberflächen wird bestimmt unter Verwendung eines standardisierten Belags mit einem bestimmten Weichmachergehalt und einer bestimmten Weichmacherabgabe. Die angegebenen Werte beziehen sich dabei auf einen Belag, welcher hinsichtlich dieser Parameter z.B. dem Belag unter der Produktbezeichnung SCALA 55 des Unternehmens Armstrong DLW GmbH als Klebepartner entspricht. Zur Bestimmung der Weichmacheraufnahmefähigkeit wird die Selbstklebefolie mit der zu prüfenden Haftkleberbeschichtung auf den angegebenen Belag mit den entsprechenden Standardwerten des Weichmachergehalts und der Weichmacherabgabefähigkeit aufgeklebt. Die verwendeten Stückgrößen liegen dabei jeweils in der Größenordnung von etwa 100 cm². Nach einem gewissen Alterungsvorgang, z. B. 7 Tage bis 70° C, wird durch Gewichtsdifferenzmessung erfasst, wie viel Masse der entsprechende Belag an die Haftkleberbeschichtung der getesteten Selbstklebefolie abgibt. Somit ist die erfindungsgemäße Weichmacheraufnahmefähigkeit bestimmbar.

Durch die erfindungsgemäße Verwendung der Selbstklebefolie mit einer Kombination aus weichmacherundurchlässiger Sperrschicht und begrenzter Weichmacheraufnahmefähigkeit von lediglich bis zu 20 g/m² der Haftkleberbeschichtung zumindest einer der Oberflächen der Selbstklebefolie kann eine Verbesserung der Klebeeigenschaften einer solchen Selbstklebefolie erfindungsgemäß erreicht werden. Insbesondere können dadurch die Nachteile des Standes der Technik überwunden werden, nämlich insbesondere speziell die großen Dimensionsänderungen durch Weichmachermigration vermieden werden. Der Grund dafür liegt darin, dass erfindungsgemäß verwendet nicht nur eine Sperrschicht vorgesehen ist, sondern darüber hinaus auch die Weichmacheraufnahmefähigkeit entsprechend begrenzt ist, so dass der Weichmacher nicht aus dem Belag oder dem Untergrund in die Haftkleberbeschichtung der erfindungsgemäßen Selbstklebefolie in so großem Maß gelangen kann, dass durch entsprechenden Verlust an Weichmacher in dem Belag bzw. dem Untergrund es dort zu einer großen Dimensionsänderung kommen kann. Der Weichmacher kann so länger bzw. generell in höherem Maß im Belag bzw. im Untergrund verbleiben, so dass die mit einer Weichmachermigration üblicherweise verbundenen Dimensionsänderungen ganz ausbleiben oder wesentlich geringer ausfallen als bei der Verwendung von Selbstklebefolien des Standes der Technik, welche keine erfindungsgemäße Sperrschicht aufweisen und mit keiner erfindungsgemäß reduzierten Weichmacheraufnahmefähigkeit der Haftkleberbeschichtung zumindest einer der Oberflächen dort versehen sind.

Um insbesondere die Dimensionsänderung des Belags zuverlässig kontrollieren zu können, weist gemäß einer bevorzugten Ausführungsform die erfindungsgemäße Selbstklebefolie eine Haftkleberbeschichtung der oberen Oberfläche auf, welche dort begrenzt aufnahmefähig für Weichmacher ist. Insbesondere die obere Oberfläche ist ja in unmittelbarem Kontakt mit dem Belag, so dass dort die Dimensionsänderungen des Belags besonders effektiv kontrollierbar sind.

Erfindungsgemäß ist eine Ausführungsform der erfindungsgemäß verwendeten Selbstklebefolie, bei welcher zumindest die Haftkleberbeschichtung der oberen Oberfläche aus einem solchen Haftkleber besteht, welcher im Bereich von 10 Gew.-% bis zu 70 Gew.-% Weichmacher in seiner Trockensubstanz enthält, bevorzugt im Bereich von 10 Gew.-% bis zu 50 Gew.-% Weichmacher in seiner Trockensubstanz enthält, noch bevorzugter im Bereich von 15 Gew.-% bis zu 40 Gew.-% Weichmacher in seiner Trockensubstanz enthält. Mit diesem definierten Weichmachergehalt in der Trockensubstanz der Haftkleberbeschichtung zumindest der oberen Oberfläche kann besonders effektiv sichergestellt werden, dass beispielsweise die Differenz an Weichmacher im Belag und in der Haftkleberbeschichtung der entsprechenden Oberfläche der erfindungsgemäßen Selbstklebefolie eher gering eingestellt ist. Somit ist der Unterschied im Gefälle der Gewichtsprozente des Weichmachergehalts geringer, was die unerwünschte Migration von Weichmacher weiter erfindungsgemäß bevorzugt vorteilhaft verringern kann.

Anzumerken ist, dass allgemein die begrenzte Weichmacheraufnahmefähigkeit und der Weichmachergehalt der Haftkleberbeschichtung der oberen Oberfläche, wie oben erläutert, erfindungsgemäß eingestellt sein kann, aber auch in Kombination die entsprechenden Werte für die Haftkleberbeschichtung der unteren Oberfläche der erfindungsgemäß verwendeten Selbstklebefolie zum Untergrund hin entsprechend gewählt sein können. Somit kann auch eine mögliche Beeinflussung durch Migration von Weichmacher in/aus dem Untergrund erfindungsgemäß einfach kontrollierbar sein.

Die Haftkleberbeschichtung zumindest einer der Oberflächen der erfindungsgemäßen Selbstklebefolie kann zweckmäßig aus einem Haftklebermaterial bestehen, welches ausgewählt ist aus der nicht abgeschlossenen Gruppe bestehend aus Haftklebstoffen basierend auf Acrylat, Chloropren-Kautschuk, Polyurethan, Styrolacrylat, Vinylacetat, Vinylacetat-Ethylen und/oder deren Mischungen und/oder deren Copolymerisaten, in der Regel vorliegend als Dispersions-Klebstoff, lösemittelbasierter Klebstoff oder Schmelzklebstoff, rein physikalisch härtend und/oder chemisch und/oder physikalisch nachvernetzend ausgerüstet. Besonders bevorzugt sind nach momentanem Kenntnisstand der Anmelderin die Haftklebstoffe basierend auf Acrylat, Vinylacetat, Vinylacetat-Ethylen und/oder deren Mischungen und/oder deren Copolymerisate.

Die Trägerschicht der erfindungsgemäßen Selbstklebefolie kann beispielsweise auch mehrschichtig aufgebaut sein.

Insbesondere bevorzugt kann die Sperrschicht ein Teil der Trägerschicht sein. Dabei kann besonders bevorzugt die Sperrschicht auf zumindest einer Seite der Trägerschicht angeordnet sein, bevorzugt auf deren oberen Seite, welche dem Belag zugewandt ist.

Auch kann die Sperrschicht beispielsweise bevorzugt als Zwischenschicht zwischen mehreren Schichten der Trägerschicht angeordnet sein.

Generell kann durch entsprechende Gestaltung des Schichtaufbaus beispielsweise die Stabilität der erfindungsgemäßen Selbstklebefolie gegen Dimensionsänderungen der Selbstklebefolie selbst entsprechend ausgewählt sein.

Erfindungsgemäß ist die Sperrschicht eine Polymerschicht aus Polymermaterial, ausgewählt aus der nicht abgeschlossenen Gruppe Polyamid (aliphatisch, aromatisch), Polyester (aliphatisch, aromatisch), Polycarbonat, Polyacrylsäureester, Polyacrylnitril, Polyamidimid, Polybutylacrylat, Polyesteramid, Polyetherimid, Polyetherketon, Polyethercarbonat, Polyethylenterephthalat, Polyimid, Polylactid, Polymethylmethacrylat, Polyacrylesteramid, Polyurethan oder Polyvinylalkohol. Die Verwendung von Materialien aus der nicht abgeschlossenen Gruppe Polyethylen, Polypropylen, Polyethylenporpylen, Polyolefine, Polyoxymethylen, Polyphenylvinyl, Polystyrol, Polyvinylacetat, Polyvinylbutyral, Polyvinylchlorid oder Polyvinylfluorid könnten gegebenenfalls je nach Anwendung auch denkbar sein.

Bevorzugt kann die Trägerschicht der erfindungsgemäßen Selbstklebefolie aus einem Polymermaterial bestehen, bevorzugt aus einem Polymermaterial aus der nicht abgeschlossenen Gruppe Polyethylen, Polypropylen, Polyamid (aliphatisch, aromatisch), Polyester (aliphatisch, aromatisch), Polyethylenporpylen, Polyethylenterephthalat, Polylactid, Polymethylmethacrylat, Polyolefine, Polyvinylbutyral oder Polyvinylchlorid. Die Verwendung von Materialien aus der nicht abgeschlossenen Gruppe Polycarbonat, Polyacrylsäureester, Polyacrylnitril, Polyamidimid, Polybutylacrylat, Polyesteramid, Polyetherimid, Polyetherketon, Polyethercarbonat, Polyimid, Polyacrylesteramid, Polyoxymethylen, Polyphenylvinyl. Polystyrol, Polyurethan, Polyvinylacetat, Polyvinylalkohol oder Polyvinylfluorid könnten gegebenenfalls je nach Anwendung auch denkbar sein.

Die Sperrschicht als eine Polymerschicht weist eine Dicke im Bereich von 1 µm bis zu 100 µm auf, bevorzugt im Bereich von 5 µm bis zu 50 µm, bevorzugter eine Dicke im Bereich von 10 µm bis zu 30 µm. Dies ergibt im Fall der Verwendung einer Polymerschicht als Sperrschicht eine besondere Stabilität sowohl in mechanischer Hinsicht als auch in Hinsicht auf die Sperrwirkung gegen den Durchtritt von Weichmachern.

Je nach Anwendung kann die erfindungsgemäß verwendete Selbstklebefolie zweckmäßig eine Breite in einem Bereich von 30 mm bis 2000 mm aufweisen, bevorzugt in einem Bereich von 500 mm bis 1500 mm und bevorzugter in einem Bereich von 600 mm bis 1000 mm. Dabei kann die Breite bei Verwendung für Treppen besonders bevorzugt in einem Bereich von 100 mm bis 500 mm liegen, insbesondere bevorzugt in einem Bereich von 150 mm bis 350 mm liegen, bei Verwendung für Sockelleisten kann die Breite besonders bevorzugt in einem Bereich von 20 mm bis 150 mm liegen, insbesondere bevorzugt in einem Bereich von 30 mm bis 100 mm liegen und bei Verwendung auf Böden oder Wänden kann die Breite besonders bevorzugt mindestens 350 mm betragen. Diese Breiten erlauben eine einfache Anwendbarkeit beim Verlegevorgang der so bevorzugt gestalteten erfindungsgemäßen Selbstklebefolie. Je nach Anwendung kann somit eine geeignete Verarbeitungsbreite gegeben sein.

Um eine mögliche rückstandsfreie Wiederablösbarkeit der erfindungsgemäßen Selbstklebefolie zu ermöglichen, kann die untere Oberfläche eine Haftkleberbeschichtung mit geringerer Haftstärke als die Haftstärke der Haftkleberbeschichtung an der oberen Oberfläche aufweisen. Es kann aber auch beispielsweise bei der Verwendung für Treppen oder Sockelleisten zweckmäßig sein, dass die untere Oberfläche eine Haftkleberbeschichtung mit größerer Haftstärke als die Haftstärke der Haftkleberbeschichtung an der oberen Oberfläche aufweist, um dort beispielsweise die Verklebung auf unebenen Untergründen und/oder unter mechanischer Trittbelastung weiter zu verbessern.

Die Haftstärke kann dabei unter Messung der Haftkraft bestimmt werden gemäß der Norm DIN EN 1939.

Um die Verarbeitbarkeit der erfindungsgemäßen Selbstklebefolie auf einfache konstruktive Weise zu verbessern, kann zumindest die Haftkleberbeschichtung der oberen Oberfläche mit einer entfernbaren Abdeckschicht versehen sein.

Auch kann die erfindungsgemäße Selbstklebefolie zweckmäßig zu einer Rolle gewickelt sein und so vertrieben werden.

Die Erfindung wird im Folgenden anhand von nicht in allen Eigenschaften erfindungsgemäßen Selbstklebefolienmustern 1 und 2 näher erläutert werden.

Beispielhaft wurden zwei Muster einer metallisierten Selbstklebefolie im Vergleich zu herkömmlichen Selbstklebefolien des Standes der Technik hinsichtlich der Weichmacheraufnahmefähigkeit sowie hinsichtlich der Dimensionsänderungen untersucht.

Das erste Muster der Selbstklebefolie hatte folgenden Schichtaufbau (von oben, d.h. in der Anwendung dem Belag zugewandt, nach unten, d.h. in der Anwendung dem Untergrund zugewandt):

**Muster 1:**

| | |
|---|---|
| Abdeckschicht: | Beidseitig silikonisiertes Schutzpapier |
| Obere Haftkleberbeschichtung: | Acrylat-Haftkleber |
| Sperrschicht: | Aluminium-Metallschicht |
| Trägerschicht: | Polyestermaterial |
| Untere Haftkleberbeschichtung: | Acrylat-Haftkleber |

Das zweite Muster der Selbstklebefolie hatte folgenden Schichtaufbau (von oben, d.h. in der Anwendung dem Belag zugewandt, nach unten, d.h. in der Anwendung dem Untergrund zugewandt):

**Muster 2:**

| | |
|---|---|
| Abdeckschicht: | Beidseitig silikonisiertes Schutzpapier |
| Obere Haftkleberbeschichtung: | Acrylat-Haftkleber |
| Trägerschicht a: | Polyestermaterial |
| Sperrschicht: | Aluminium-Metallschicht |
| Trägerschicht b: | Polyestermaterial |
| Untere Haftkleberbeschichtung: | Acrylat-Haftkleber |

Als Vergleichsmuster des Standes der Technik wurden folgende Produkte untersucht: UZIN, SIGAN 1 (Vergleichsmuster 1), THOMSIT, DT 100 (Vergleichsmuster 2), BOSTIK, NIBOTAPE COMPLETE (Vergleichsmuster 3), GPI 374614 (Vergleichsmuster 4), UZIN, CONTACT (Vergleichsmuster 5).

Die Weichmacheraufnahmefähigkeit wurde dabei gemäß der weiter oben angegebenen Methode mit einem Belag der Produktbezeichnung SCALA 55 des Unternehmens Armstrong DLW GmbH als Klebepartner bestimmt. Zur Bestimmung der Weichmacheraufnahmefähigkeit wird die Selbstklebefolie mit der zu prüfenden Haftkleberbeschichtung auf den angegebenen Belag mit den entsprechenden Standardwerten des Weichmachergehalts und der Weichmacherabgabefähigkeit aufgeklebt. Die verwendeten Stückgrößen liegen dabei jeweils in der Größenordnung von etwa 100 cm². Nach einem Alterungsvorgang über 7 Tage bei 70° C wird durch Differenzwägung die Weichmacheraufnahmefähigkeit der Muster bestimmt.

Die Dimensionsänderungen wurden dabei zum einen teilweise gemäß der Norm DIN EN 1903 bestimmt und auch gemäß einer individuellen Methode der Anmelderin jeweils unter Verwendung des Belags der Produktbezeichnung SCALA 55 des Unternehmens Armstrong DLW GmbH als Klebepartner bei der Bodenbelagsanwendung und jeweils unter Verwendung des Belags der Produktbezeichnung WL 60 des Unternehmens Döllken als Klebepartner bei der Sockelleistenanwendung. Bei der individuellen Methode der Anmelderin wurde ein Alterungsvorgang über 7 Tage bei einer Temperatur von 70° C simuliert und durchlaufen (siehe ebenfalls die Methode oben) und bei der Messung gemäß der Norm DIN EN 1903 wurde ein Alterungsvorgang über 4 entsprechend normgemäße Prüfzyklen simuliert und durchlaufen.

Die Ergebnisse diesbezüglich sind in den folgenden Tabellen zusammengefasst.

**Bodenbelagsanwendung (Belag SCALA 55, Armstrong DLW GmbH), Tabelle 1:**

| | **Produkt** | | | | |
|---|---|---|---|---|---|
| | Muster 1 | Vergleichsmuster 1 | Vergleichsmuster 2 | Vergleichsmuster 3 | Vergleichsmuster 4 |
| Spezifische Weichmacherauf-nahmefähigkeit in g/m² | 14,68 | 31,66 | 26,76 | 31,10 | 23,03 |
| Dimensionsänderungen gemäß DIN EN 1903 | -0,10% | -0,24 % | -0,18% | - | - |
| Dimensionsänderungen gemäß individueller Methode | -0,27 % | -0,62 % | -0,48 % | -0,68 % | -0,41 % |

Die obige Tabelle bezieht sich auf die Anwendung der Selbstklebefolie im Bereich der Bodenbelagsverlegung unter Verwendung von Bodenbelägen.

Zusätzlich wurde noch in gleicher Weise die Anwendung der erfindungsgemäßen Selbstklebefolie im Bereich der Sockelleistenverlegung untersucht.

**Sockelleistenanwendung (Belag WL 60 des Unternehmens Döllken), Tabelle 2:**

| | **Produkt** | |
|---|---|---|
| | Muster 2 | Vergleichsmuster 5 |
| Spezifische Weichmacheraufnahmefähigkeit in g/m² (gemessen mit Belag SCALA 55, Armstrong DLW GmbH) | 15,28 | 40,92 |
| Dimensionsänderungen gemäß DIN EN 1903 | -0,10 % | -0,58 % |
| Dimensionsänderungen gemäß individueller Methode | -0,26 % | -0,58 % |

Die Beispiele und Vergleichsuntersuchungen gemäß den obigen Tabellen zeigen, dass bei Verwendung einer Selbstklebefolie mit einer begrenzten Weichmacheraufnahmefähigkeit deutlich bessere Dimensionsstabilitäten erreicht werden können, verglichen zur Verwendung von Selbstklebefolien/Sockelbändern des sonstigen Standes der Technik.

## Patentansprüche

1. Verwendung einer Selbstklebefolie, zum Verkleben eines Belags, eines Bodenbelags, einer Sockelleiste oder eines Wandbelags, auch mehrteilig, auf einem Untergrund, einem Fußboden, einer Treppe oder einer Wand, mit einer Trägerschicht, welche an einer oberen, dem Belag zugewandten Oberfläche und an einer unteren, dem Untergrund zugewandten Oberfläche mit einer Haftkleberbeschichtung beschichtet ist,
**dadurch gekennzeichnet, dass**
die Selbstklebefolie eine Sperrschicht aufweist, welche für Weichmacher undurchlässig ist, wobei die Sperrschicht eine Polymerschicht aus Polymermaterial ist, ausgewählt aus der Gruppe, Polyamid (aliphatisch, aromatisch), Polyester (aliphatisch, aromatisch), Polycarbonat, Polyacrylsäureester, Polyacrylnitril, Polyamidimid, Polybutylacrylat, Polyesteramid, Polyetherimid, Polyetherketon, Polyethercarbonat, Polyethylenterephthalat, Polyimid, Polylactid, Polymethylmethacrylat, Polyacrylesteramid, Polyurethan, oder Polyvinylalkohol, und wobei die Polymerschicht eine Dicke im Bereich von 1 µm bis zu 100 µm aufweist, und dass die Haftkleberbeschichtung zumindest einer der Oberflächen begrenzt aufnahmefähig ist für Weichmacher mit einer Weichmacheraufnahmefähigkeit von bis zu 20 g/m², bestimmt gemäß der in der Patentbeschreibung dazu angegebenen Methode, und dass
zumindest die Haftkleberbeschichtung der oberen Oberfläche aus einem solchen Haftkleber besteht, welcher im Bereich von 10 Gew. % bis zu 70 Gew. % Weichmacher in seiner Trockensubstanz enthält.

2. Verwendung der Selbstklebefolie nach Anspruch 1, **dadurch gekennzeichnet, dass** die begrenzte Weichmacheraufnahmefähigkeit im Bereich von 2 g/m² bis zu 20 g/m² liegt, bevorzugt im Bereich von 5 g/m² bis zu 15 g/m² liegt.

3. Verwendung der Selbstklebefolie nach Anspruch 1 oder 2, **dadurch gekennzeichnet, dass** die Haftkleberbeschichtung der oberen Oberfläche begrenzt aufnahmefähig ist für Weichmacher ist.

4. Verwendung der Selbstklebefolie nach einem der Ansprüche 1 bis 3, **dadurch gekennzeichnet, dass** zumindest die Haftkleberbeschichtung der oberen Oberfläche aus einem solchen Haftkleber besteht, welcher im Bereich von 15 Gew. % bis zu 40 Gew. % Weichmacher in seiner Trockensubstanz enthält.

5. Verwendung der Selbstklebefolie nach einem der Ansprüche 1 bis 4, **dadurch gekennzeichnet, dass** die Haftkleberbeschichtung zumindest der oberen Oberfläche aus Haftklebermaterial ausgewählt aus der folgenden Gruppe besteht, Haftklebstoffen basierend auf Acrylat, Chloropren-Kautschuk, Polyurethan, Styrolacrylat, Vinylacetat, Vinylacetat-Ethylen und/oder deren Mischungen und/oder deren Copolymerisaten, bevorzugt vorliegend als Dispersions-Klebstoffe, lösemittelbasierter Klebstoffe oder Schmelzklebstoffe, und dabei rein physikalisch härtend und/oder chemisch und/oder physikalisch nachvernetzend ausgerüstet.

6. Verwendung der Selbstklebefolie nach einem der Ansprüche 1 bis 5, **dadurch gekennzeichnet, dass** die Trägerschicht mehrschichtig ist.

7. Verwendung der Selbstklebefolie nach einem der Ansprüche 1 bis 6, **dadurch gekennzeichnet, dass** die Sperrschicht ein Teil der Trägerschicht ist.

8. Verwendung der Selbstklebefolie nach Anspruch 7, **dadurch gekennzeichnet, dass** die Sperrschicht auf zumindest einer Seite der Trägerschicht angeordnet ist, bevorzugt auf einer oberen Seite, welche dem Belag zugewandt ist.

9. Verwendung der Selbstklebefolie nach Anspruch 7, **dadurch gekennzeichnet, dass** die Sperrschicht als Zwischenschicht zwischen mehreren Schichten der Trägerschicht angeordnet ist.

10. Verwendung der Selbstklebefolie nach einem der Ansprüche 1 bis 9, **dadurch gekennzeichnet, dass** die Trägerschicht aus einem Polymermaterial besteht, bevorzugt aus einem Polymermaterial aus der Gruppe Polyethylen, Polypropylen, Polyamid (aliphatisch, aromatisch), Polyester (aliphatisch, aromatisch), Polyethylenporpylen, Polyethylenterephthalat, Polylactid, Polymethylmethacrylat, Polyolefine, Polyvinylbutyral oder Polyvinylchlorid.

11. Verwendung der Selbstklebefolie nach einem der Ansprüche 1 bis 10, **dadurch gekennzeichnet, dass** die Sperrschicht die Polymerschicht mit einer Dicke im Bereich von 5 µm bis zu 50 µm ist, bevorzugter mit einer Dicke im Bereich von 10 µm bis zu 30 µm ist.

12. Verwendung der Selbstklebefolie nach einem der Ansprüche 1 bis 11, **dadurch gekennzeichnet, dass** ihre Breite in einem Bereich von 30 mm bis 2000 mm liegt, bevorzugt in einem Bereich von 500 mm bis 1500 mm, und bevorzugter in einem Bereich von 600 mm bis 1000 mm liegt, wobei ihre Breite bei Verwendung für Treppen bei Verwendung für Treppen besonders bevorzugt in einem Bereich von 100 mm bis 500 mm liegt, insbesondere bevorzugt in einem Bereich von 150 mm bis 350 mm liegt, bei Verwendung für Sockelleisten besonders bevorzugt in einem Bereich von 20 mm bis 150 mm liegt, insbesondere bevorzugt in einem Bereich von 30 mm bis 100 mm liegt und bei Verwendung auf Böden oder Wänden besonders bevorzugt mindestens 350 mm beträgt.

13. Verwendung der Selbstklebefolie nach einem der Ansprüche 1 bis 12, **dadurch gekennzeichnet, dass** die untere Oberfläche eine Haftkleberbeschichtung mit geringerer Haftstärke als die Haftstärke der Haftkleberbeschichtung an der oberen Oberfläche aufweist.

14. Verwendung der Selbstklebefolie nach einem der Ansprüche 1 bis 13, **dadurch gekennzeichnet, dass** zumindest die Haftkleberbeschichtung der oberen Oberfläche mit einer entfernbaren Abdeckschicht versehen ist.

15. Verwendung der Selbstklebefolie nach einem der Ansprüche 1 bis 14, **dadurch gekennzeichnet, dass** die Selbstklebefolie zu einer Rolle gewickelt ist.

## Claims

1. Use of a self-adhesive film for bonding a covering, a floor covering, a skirting board or a wall covering, including in several parts, to a substrate, a floor, a staircase or a wall, with a backing layer which is coated with a pressure-sensitive adhesive coating on an upper surface facing the covering and on a lower surface facing the substrate,
**characterised in that**
the self-adhesive film has a barrier layer that is impermeable to plasticisers, the barrier layer being a polymer layer of polymer material selected from the group: polyamide (aliphatic, aromatic), polyester (aliphatic, aromatic), polycarbonate, polyacrylic acid ester, polyacrylonitrile, polyamide imide, polybutyl acrylate, polyester amide, polyether imide, polyether ketone, polyether carbonate, polyethylene terephthalate, polyimide, polylactide, polymethyl methacrylate, polyacrylic ester amide, polyurethane, or polyvinyl alcohol, the polymer layer having a thickness in the range of 1 µm up to 100 µm, and the pressure-sensitive adhesive coating of at least one of the surfaces having limited capacity to absorb plasticisers, with plasticiser absorbency of up to 20 g/m², determined according to the method specified in the patent description, and that
at least the pressure-sensitive adhesive coating of the upper surface consists of such a pressure-sensitive adhesive containing plasticiser in the range of 10% by weight to 70% by weight of dry matter.

2. Use of the self-adhesive film according to claim 1, **characterised in that** the limited plasticiser absorbency is in the range of 2 g/m² to 20 g/m², preferably in the range of 5 g/m² to 15 g/m².

3. Use of the self-adhesive film according to claim 1 or 2, **characterised in that** the pressure-sensitive adhesive coating of the upper surface has limited plasticiser absorbency.

4. Use of the self-adhesive film according to any one of claims 1 to 3, **characterised in that** at least the pressure-sensitive adhesive coating of the upper surface consists of such a pressure-sensitive adhesive containing plasticiser in the range of 15% by weight to 40% by weight of dry matter.

5. Use of the self-adhesive film according to any one of claims 1 to 4, **characterised in that** the pressure-sensitive adhesive coating of at least the upper surface consists of pressure-sensitive adhesive material selected from the following group: pressure-sensitive adhesives based on acrylate, chloroprene rubber, polyurethane, styrene acrylate, vinyl acetate, vinyl acetate-ethylene and/or mixtures thereof and/or copolymers thereof, preferably in the form of dispersion adhesives, solvent-based adhesives or hot-melt adhesives, and with purely physical curing and/or chemical and/or physical post-crosslinking.

6. Use of the self-adhesive film according to any one of claims 1 to 5, **characterised in that** the backing layer is multi-layered.

7. Use of the self-adhesive film according to any one of claims 1 to 6, **characterised in that** the barrier layer is part of the backing layer.

8. Use of the self-adhesive film according to claim 7, **characterised in that** the barrier layer is disposed on at least one side of the backing layer, preferably on an upper side facing the covering.

9. Use of the self-adhesive film according to claim 7, **characterised in that** the barrier layer is disposed as an intermediate layer between a plurality of layers of the backing layer.

10. Use of the self-adhesive film according to any one of claims 1 to 9, **characterised in that** the backing layer consists of a polymeric material, preferably a polymeric material from the group: polyethylene, polypropylene, polyamide (aliphatic, aromatic), polyester (aliphatic, aromatic), polyethylene propylene, polyethylene terephthalate, polylactide, polymethyl methacrylate, polyolefins, polyvinyl butyral or polyvinyl chloride.

11. Use of the self-adhesive film according to any one of claims 1 to 10, **characterised in that** the barrier layer is the polymer layer having a thickness in the range of 5 µm to 50 µm, more preferably having a thickness in the range of 10 µm to 30 µm.

12. Use of the self-adhesive film according to any one of claims 1 to 11, **characterised in that** its width lies in a range of 30 mm to 2000 mm, preferably in a range of 500 mm to 1500 mm, and more preferably in a range of 600 mm to 1000 mm, its width when used for stairs lying particularly preferably in a range of 100 mm to 500 mm, in particular preferably in a range of 150 mm to 350 mm, when used for skirting boards particularly preferably in a range of 20 mm to 150 mm, in particular preferably in a range of 30 mm to 100 mm, and when used on floors or walls particularly preferably at least 350 mm.

13. Use of the self-adhesive film according to any one of claims 1 to 12, **characterised in that** the lower surface has a pressure-sensitive adhesive coating with a lower adhesive strength than the adhesive strength of the pressure-sensitive adhesive coating on the upper surface.

14. Use of the self-adhesive film according to any one of claims 1 to 13, **characterised in that** at least the pressure-sensitive adhesive coating of the upper surface is provided with a removable cover layer.

15. Use of the self-adhesive film according to any one of claims 1 to 14, **characterised in that** the self-adhesive film is wound on a roll.

## Revendications

1. Utilisation d'un film autocollant pour coller un revêtement, un revêtement de sol, une lame de socle ou un revêtement de mur ainsi qu'en plusieurs parties, sur un sous-sol, un plancher, un escalier ou un mur avec une couche de support dont la surface supérieure, tournée vers le revêtement et la surface supérieure tournée vers le sous-sol, est revêtue d'une couche adhésive,
utilisation **caractérisée en ce que**
le film autocollant a une couche de blocage imperméable à un plastifiant,
la couche de blocage étant une couche de polymère en un matériau de polymère choisi dans le groupe comprenant : polyamide (aliphatique, aromatique), polyester (aliphatique, aromatique), polycarbonate, ester d'acide polyacrylique, polyacrylanitrile, polyamidimide, polybutylacrylate, polyesteramide, polyétherimide, polyéthercétone, polyéther-carbonate, polyéthylène téréphtalate, polyimide, polyacide, polyméthyl méthacrylate, polyacrylate-esteramide, polyuréthane ou alcool polyvynylique, et
la couche de polymère a une épaisseur de l'ordre de 1 µm jusqu'à 100 µm, et
la couche d'adhésif d'au moins l'une des surfaces est réceptrice de façon limitée pour un plastifiant avec une capacité de réception de plastifiant allant jusqu'à 20g/m², définie selon le procédé donné dans la description du brevet et **en ce que**
au moins la couche d'adhésif de la surface supérieure est en un adhésif qui contient entre 10% pondéraux jusqu'à 70% pondéraux de plastifiant à l'état sec.

2. Utilisation du film autocollant de la revendication 1,
**caractérisée en ce que**
la capacité limitée d'absorption de plastifiant est dans une plage comprise entre 2 g/m² jusqu'à 20 g/m² et de préférence dans une plage entre 5 g/m² jusqu'à 15 g/m².

3. Utilisation du film autocollant de la revendication 1 ou 2,
**caractérisée en ce que**
le revêtement d'adhésif de la surface supérieure a une réception limitée en plastifiant.

4. Utilisation du film autocollant selon l'une des revendications 1 à 3,
**caractérisée en ce que**
au moins le revêtement d'adhésif de la surface supérieure est un adhésif qui contient entre 15% pondéraux jusqu'à 40% pondéraux de plastifiant à l'état sec.

5. Utilisation du film autocollant selon l'une des revendications 1 à 4,
**caractérisée en ce que**
le revêtement d'adhésif a sur sa surface supérieure un matériau adhérant choisi dans le groupe suivant comprenant :
adhésif à base d'acrylate, caoutchouc chloroprène, polyuréthane, styrène-acrylate, vinyle acétate, acétate-éthylène de vinyle et/ou leur mélange et/ou leur copolymérisats de préférence sous la forme d'adhésif en dispersion, d'adhésif à solvant ou d'adhésif fusible et durcissant d'une manière purement physique et/ou chimique et/ou réticulant ensuite physiquement.

6. Utilisation du film autocollant selon l'une des revendications 1 à 5,
**caractérisée en ce que**
la couche de support comprend plusieurs couches.

7. Utilisation du film autocollant selon l'une des revendications 1 à 6,
**caractérisée en ce que**
la couche de blocage est une partie de la couche de support.

8. Utilisation du film autocollant selon la revendication 7,
**caractérisée en ce que**
la couche de blocage est prévue sur au moins un côté de la couche de support et de préférence sur le côté supérieur tourné vers le revêtement.

9. Utilisation du film autocollant selon la revendication 7,
**caractérisée en ce que**
la couche de blocage est une couche intermédiaire comprise entre plusieurs couches formant la couche de support.

10. Utilisation du film autocollant selon l'une des revendications 1 à 9,
**caractérisée en ce que**
la couche de support est en un matériau de polymère, de préférence en un matériau de polymère du groupe comprenant : polyéthylène, polypropylène, polyamide (aliphatique, aromatique), polyester (aliphatique, aromatique), polyéthylène-propylène, polyéthylène-téréphtalate, polyactide, polyméthyl-méthacrylate, polyoléfine, polybutyral de vinyle ou chlorure de polyvinyle.

11. Utilisation du film autocollant selon l'une des revendications 1 à 10,
**caractérisée en ce que**
la couche de blocage, la couche de polymère a une épaisseur de l'ordre de 5 µm jusqu'à 50 µm et de préférence une épaisseur comprise entre 10 µm et 30 µm.

12. Utilisation du film autocollant selon l'une des revendications 1 à 11,
**caractérisée en ce que**
sa largeur est dans une plage comprise entre 30 mm et 2000 mm, de préférence une plage comprise entre 500 mm et 1500 mm et de préférence dans une plage entre 600 mm et 1000 mm, sa largeur pour l'utilisation pour des escaliers, dans l'application aux escaliers est d'une manière particulièrement préférentielle, dans une plage comprise entre 100 mm et 500 mm et notamment de façon préférentielle, dans une plage comprise entre 150 mm et 350 mm, et pour l'utilisation pour des lames de socle, elle est, de manière particulièrement préférentielle, dans une plage de 20 mm à 150 mm et notamment de manière particulièrement préférentielle, dans une plage de 30 mm à 100 mm et dans son utilisation pour le sol et les murs, elle est de préférence au moins de 350 mm.

13. Utilisation du film autocollant selon l'une des revendications 1 à 12,
**caractérisée en ce que**
la surface inférieure a un revêtement d'adhésif ayant une adhérence moindre que l'adhérence de la couche d'adhésif de la surface supérieure.

14. Utilisation du film autocollant selon l'une des revendications 1 à 13,
**caractérisée en ce que**
au moins le revêtement d'adhésif de la surface supérieure est muni d'une couche de couverture amovible.

15. Utilisation du film autocollant selon l'une des revendications 1 à 14,
**caractérisée en ce que**
le film autocollant est enroulé en bobine.
